# EUROPÄISCHE PATENTSCHRIFT

(11) **EP 1 524 165 B1**
(45) Veröffentlichungstag und Bekanntmachung des Hinweises auf die Patenterteilung: **04.10.2006**
(21) Anmeldenummer: 04010261.8
(22) Anmeldetag: 30.04.2004
(51) Int. Cl.: B61G 7/00, B60D 1/60

(54) **Vorrichtung zur Abdeckung einer Mittelpufferkupplung eines schienengebundenen Fahrzeuges gegen Witterungseinflüsse und Verunreinigungen**
Device for covering and protecting a central coupler of a rail vehicle against poor weather conditions and dirt.
Dispositif pour couvrir et protéger un attelage central d'un véhicule ferroviaire contre les intempéries et les salissures.

(30) Priorität: 16.10.2003 DE 20316075 U
(43) Veröffentlichungstag der Anmeldung: 20.04.2005
(73) Patentinhaber: DB Regio AG, 60326 Frankfurt (DE)
(72) Erfinder: Schön, Ludwig, 92726 Waidhaus (DE); Domke, Uwe, 08468 Heinsdorfergrund (DE)
(74) Vertreter: Zinken-Sommer, Rainer

(56) Entgegenhaltungen:
- EP-A- 1 350 703
- DE-A- 10 254 338

## Beschreibung

Die Erfindung betrifft eine Vorrichtung zur Abdeckung einer Mittelpufferkupplung eines schienengebundenen Fahrzeuges gegen Witterungseinflüsse und Verunreinigungen.

Schienengebundene Fahrzeuge weisen zwischen den einzelnen Waggons sogenannte Mittelpufferkupplungen (DE-OS 101 44 838 A1) auf. Diese haben die Aufgabe die Waggons sicher und ohne großen manuellen Aufwand miteinander zu verbinden bzw. zu entkoppeln. Die Kupplungen eines ersten oder letzten Fahrzeuges werden dabei durch Witterungseinflüsse und aufgewirbelte Stoffe sehr stark verunreinigt oder in Mitleidenschaft gezogen.

Zur weitgehenden Vermeidung dieser Einflüsse wurden für die ICE 2 und 3 - Flotte des Schienenfernverkehrs an den Triebfahrzeugen vorzugsweise horizontal verschwenkbare Abdeckungen der Mittelpufferkupplungen entwickelt, die in Form fester Schalen die Nase des Triebfahrzeuges bildeten (DE-OS 43 00 393 A1). In der Regel wurden diese Abdeckungen in Halbschalenbauweise durch Stangen und gelenkige Gestelle mittels pneumatischen oder hydraulischen Antrieben vor die Kupplung geschwenkt bzw. in den Kopfbereich des Triebfahrzeuges zurückgefahren (DE-PS 44 45 182 C1, DE-OS 43 12 405 A1, DE-OS 196 35 382 A1). Diese Vorrichtungen sind teuer und lassen sich sinnvoll nur an den Triebfahrzeugen anbringen. Zudem benötigen sie einen erheblichen Platzbedarf.
Weiterhin bekannt ist eine Kupplungsabdeckung und ein Verfahren zum Verschwenken dieser Abdeckung, wobei eine Haube zum Schutz des Kupplungskopfes verwendet wird und die Haube aus einem Arbeits- oder Entkupplungszustand, in welchem die Haube in im wesentlichen senkrechter Lage vor dem Kupplungskopf angeordnet ist, in einen Ruhe- oder Kupplungszustand oberhalb der Kupplung verschwenkbar ist (EP 1 350 703 A1).
Diese Kupplungsabdeckung ist weder flexibel noch zum Aufziehen auf die Kupplung geeignet. Darüber hinaus weist sie keine Öffnung für herausstehende Kupplungsteile auf.

Für Züge des Regional- und Güterverkehrs existieren solche Abdeckungen nicht. Das wäre in der oben beschriebenen Form auch nicht sinnvoll und zu teuer. Konstruktiv ließen sich diese Schalenabdeckungen auch gar nicht an den oder in den Fahrzeugen unterbringen. Hier sind (wenn überhaupt) einteilige und durchgehende Abdeckhauben für die getrennten Kupplungshälften bekannt, die beim Kuppeln in jedem Falle abgenommen und separat verstaut werden müssen.

Der Erfindung liegt die Aufgabe zugrunde, eine einfache und flexible Abdeckung für Mittelpufferkupplungen im geschlossenen und/oder getrennten Zustand zu entwickeln, die kostengünstig und vielseitig einsetzbar ist.

Dies wurde erfindungsgemäß dadurch erreicht, dass
die Mittelpufferkupplung mittels einer flexiblen, anpassbaren sowie an der Kupplung zu befestigenden Abdeckung versehen ist, wobei die Abdeckung als Haube ausgeführt ist und in ihrem hinteren Bereich eine Öffnung zum Aufziehen auf die Kupplung aufweist sowie in ihrem vorderen Bereich eine oder mehrere Verschlusseinrichtung(en) für eine weitere Öffnung angeordnet ist/sind.

Die Abdeckung weist in ihrem hinteren Bereich eine Anordnung zur Befestigung an der Kupplung auf, die als in Ösen geführte Spannvorrichtung (Seil, Gummizug, Spanngurt mit Schnellverschluss, Lederriemen mit Schnallen oder Spanngurt/Lederriemen mit Verschluss jeglicher Art) ausgeführt ist.

Die im vorderen Bereich der Abdeckung angeordnete(n) Öffnung(en) wird/werden in Form von einem oder mehreren Schlitzen ausgeführt, die über Verschlusseinrichtungen, wie Reißverschlüsse und/oder Klettverschlüsse und/oder Druckknöpfe fixiert sind.

Dabei sind die Schlitze vorzugsweise im vorderen Bereich der Abdeckung angeordnet. Damit lässt sich die Abdeckung bei einer Kopplung öffnen und nach hinten über die Kupplung streifen, ohne von der Kupplung entfernt und separat aufbewahrt zu werden.

Weitere Vorteile der Erfindung sind:
- die Abdeckung ist flexibel und lässt sich an nahezu jede Kupplung anpassen und aufziehen
- die Abdeckung ist kostengünstig
- die Kupplung wird wirksam vor Witterungseinflüssen und Verunreinigungen geschützt
- die Abdeckung muss bei einem Kuppelvorgang nicht von der Kupplung entnommen werden, was sich vorteilhaft auf das Flügelungskonzept auswirkt
- Einsparung von Arbeitszeit
- Verkürzung der Aufenthaltsdauer in Bahnhöfen, in denen Kupplungsvorgänge stattfinden
- Erhöhung des Zugfahranteils der Triebfahrzeugführer

Anhand eines Ausführungsbeispieles soll die Erfindung näher erläutert werden.

Dabei zeigt:

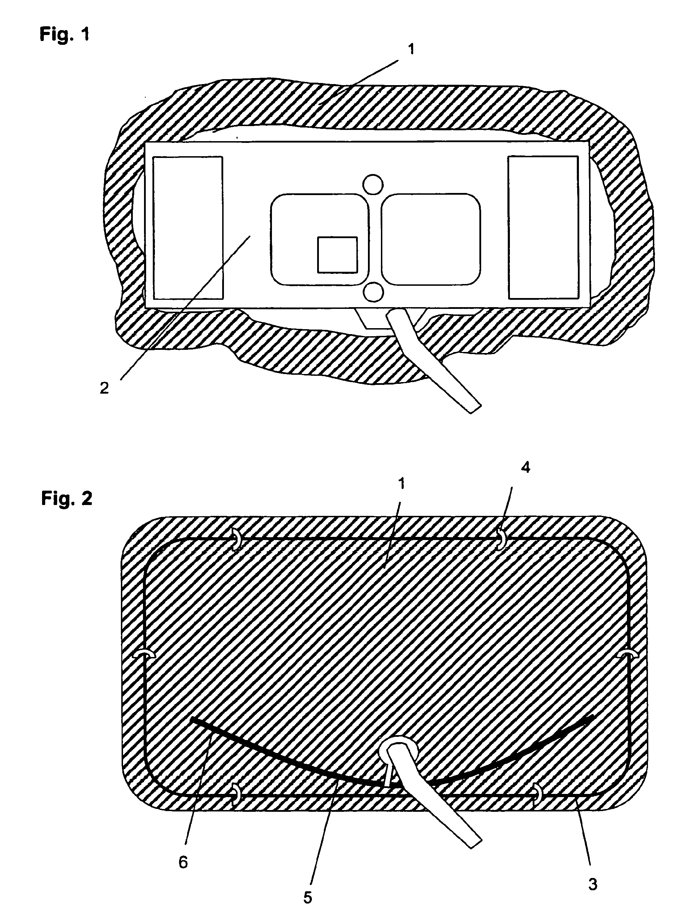

- Figur 1 - die Abdeckung in der geöffneten Ansicht
- Figur 2 - die Abdeckung in der geschlossenen Ansicht

Die als Haube ausgeführte Abdeckung 1 wird über die Kupplung 2 gezogen und weist in ihrem hinteren Bereich die Befestigungsanordnung 3 auf, die als Spannvorrichtung ausgeführt und in Ösen 4 geführt ist.
Möglich sind selbstverständlich auch jede bekannte Art von anderen Befestigungen.
Im unteren, den Schienen zugewandten Bereich der Abdeckung 1 sind ein oder mehrere Schlitze 5 angeordnet, die über Verschlusseinrichtungen 6, wie Reißverschlüsse und/oder Klettverschlüsse und/oder Druckknöpfe oder jede andere Art von mechanischen Verschlüssen, die Schlitze 5 verschließen oder öffnen.
Zum Ankoppeln an ein anderes Fahrzeug wird die Abdeckung 1 nicht abgenommen, sondern der Schlitz 5 über die Verschlusseinrichtung 6 geöffnet und über die Kupplung 2 nach hinten gezogen/geschoben. Sie kann dann an Ort und Stelle verbleiben und beim nächsten Entkopplungsvorgang wieder über die Kupplung 2 zurückgezogen und verschlossen werden.

### Liste der verwendeten Bezugszeichen

- 1 -: Abdeckung
- 2 -: Kupplung
- 3 -: Befestigungsanordnung
- 4 -: Ösen
- 5 -: Schlitze
- 6 -: Verschlusseinrichtung

## Patentansprüche

1. Vorrichtung zur Abdeckung einer Mittelpufferkupplung eines schienengebundenen Fahrzeuges gegen Witterungseinflüsse und Verunreinigungen, ***gekennzeichnet dadurch, dass*** die Mittelpufferkupplung mittels einer flexiblen, anpassbaren sowie an der Kupplung (2) zu befestigenden Abdeckung (1) versehen ist, wobei die Abdeckung (1) als Haube ausgeführt ist und in ihrem hinteren Bereich eine Öffnung zum Aufziehen auf die Kupplung (2) aufweist sowie in ihrem vorderen Bereich eine oder mehrere Verschlusseinrichtung(en) (6) für eine weitere Öffnung angeordnet ist/sind.

2. Vorrichtung nach Anspruch 1, ***gekennzeichnet dadurch, dass*** die Abdeckung (1) in ihrem hinteren Bereich eine Anordnung zur Befestigung an der Kupplung (2) aufweist.

3. Vorrichtung nach Anspruch 2, ***gekennzeichnet dadurch, dass*** die Anordnung zur Befestigung an der Kupplung eine in Ösen (4) geführte Spannvorrichtung aufweist.

4. Vorrichtung nach Anspruch 2 und 3, ***gekennzeichnet dadurch, dass*** die Anordnung zur Befestigung an der Kupplung (2) ein oder mehrere Spanngurte mit Schnellverschluss und/oder Riemen mit Schnallen und/oder Spanngurte/Riemen mit einem oder mehreren Verschlüssen verschiedener Art aufweist.

5. Vorrichtung nach Anspruch 1 bis 4, ***gekennzeichnet dadurch, dass*** die im vorderen Bereich der Abdeckung (1) angeordnete Öffnung in Form eines Schlitzes (5) oder einer Aussparung für einen Fänger der Kupplung (2) ausgeführt ist.

6. Vorrichtung nach Anspruch 5, ***gekennzeichnet dadurch, dass*** ein oder mehrere Reißverschlüsse und/oder Klettverschlüsse und/oder Druckknöpfe und/oder Riemen/Schnallen als Verschlusseinrichtung (6) verwendet werden.

## Claims

1. A device for covering a central buffer coupling of a rail-mounted vehicle against atmospheric influences and soiling, **characterized in that** the central buffer coupling is provided with a flexible and adaptable cover (1) to be fixed on the coupling (2), wherein the cover (1) is realized in the form of a hood and features an opening for being attached to the coupling (2) in its rear region, as well as one or more fastening device(s) (6) for another opening that is/are arranged in its front region.

2. The device according to claim 1, **characterized in that** the rear region of the cover (1) features an arrangement for being fixed on the coupling (2).

3. The device according to claim 2, **characterized in that** the arrangement for being fixed on the coupling features a tension device that is guided in eyelets (4).

4. The device according to claims 2 and 3, **characterized in that** the arrangement for being fixed on the coupling (2) features one or more tension belts with snap buckles and/or straps with buckles and/or tension belts/straps with one or more different types of fasteners.

5. The device according to claims 1 to 4, **characterized in that** the opening arranged in the front region of the cover (1) is realized in the form of a slot (5) or a recess for a receiver of the coupling (2).

6. The device according to claim 5, **characterized in that** the fastening device (6) used consists of one or more zippers and/or Velcro fasteners and/or snap fasteners and/or straps/buckles.

## Revendications

1. Dispositif pour protéger un attelage a tampon central d'un véhicule sur rails contre les intempéries et les salissures, **caractérisé en ce que** l'attelage a tampon central est muni d'une protection (1) flexible, adaptable et à monter sur l'attelage (2), la protection (1) étant réalisée sous la forme d'un capot et présentant, dans sa zone arrière, une ouverture permettant de l'enfiler sur l'attelage (2), et un ou plusieurs dispositifs de fermeture (6) étant disposés dans sa zone avant pour une ouverture supplémentaire.

2. Dispositif selon la revendication 1, **caractérisé en ce que** la protection (1) présente dans sa zone arrière un dispositif pour la fixation sur l'attelage (2).

3. Dispositif selon la revendication 2, **caractérisé en ce que** le dispositif pour la fixation sur l'accouplement est muni d'un dispositif de serrage passant par des oeillets (4).

4. Dispositif selon les revendications 2 et 3, **caractérisé en ce que** le dispositif pour la fixation sur l'accouplement (2) est muni d'une ou de plusieurs sangles de serrage à fermeture rapide et/ou de courroies avec des boucles et/ou de sangles de serrage/courroies avec un ou plusieurs dispositifs de fermeture de tous types.

5. Dispositif selon les revendications 1 à 4, **caractérisé en ce que** l'ouverture disposée dans la zone avant de la protection (1) est réalisée sous la forme d'une fente (5) ou d'une ouverture pour un dispositif de prise de l'attelage (2).

6. Dispositif selon la revendication 5, **caractérisé en ce qu'**une ou plusieurs fermetures à glissière et/ou fermetures auto-accrochantes et/ou boutons-pression et/ou courroies/boucles sont utilisés en tant que dispositifs de fermeture (6).
